# EUROPEAN PATENT APPLICATION

(11) **EP 1 199 101 A2**
(43) Date of publication of application: **24.04.2002**
(21) Application number: 01308513.9
(22) Date of filing: 04.10.2001
(51) Int. Cl.: B01J 20/18, B01J 20/30, B01D 53/04, B01D 53/047

(54) **Methods for preparing shaped sorbent**

(30) Priority: 19.10.2000 US 691788
(71) Applicant: THE BOC GROUP, INC., Murray Hill, New Providence, New Jersey 07974 (US)
(72) Inventor: Bülow, Martin, New Jersey 07920 (US); Shen, Dongmin, New Jersey 07922 (US); Brandt, Alfons, Salzmunde 06198 (DE); Unger, Baldur, 06846 Dessau (DE)
(74) Representative: Wickham, Michael

(57) **Abstract**

An improved method for preparing various sorbent shapes such as beads for use in gas separation processes is disclosed. Highly siliceous nanoporous materials in their crystalline powder form are stabilized by thermal pretreatment prior to their contact with a mineral binder. The resulting sorbent shapes maintain their crystalline structure particularly when the pH value of the mineral binder in its aqueous suspension is greater than 10. The sorbent beads that result from this process, are especially suitable for the separation of gaseous low-molecular-weight hydrocarbons such as paraffins, olefins, and their mixtures from carbon dioxide in wet atmospheres.

## Description

### FIELD OF INVENTION

The present invention is directed to a process for manufacturing shapes of pulverulent crystalline nanoporous materials such as highly siliceous aluminosilicates, which are not in reach, by the known state-of-the-art production methods. These shapes allow for superior performance of processes of Temperature Swing Adsorption, TSA, and Pressure Swing Adsorption, PSA, in the area of separation and purification of gases. For example, non-reacted hydrocarbons from petrochemical partial oxidation processes can be separated from other components of gaseous waste streams using the adsorbents and recycled into principal starting and/or other processes.

### BACKGROUND OF INVENTION

Typically, sorbents made of crystalline nanoporous materials such as zeolitic molecular sieves for sorption processes are shaped into secondary particles such as beads, extrudates, monolithic structures, and other configurations. Beads are often preferred to extrudates due to their superior mechanical and sorption kinetic properties, but also due to advantages in practical execution of large-scale sorption processes.

During the beading step of the overall sorbent manufacturing process, mineral clays are often used as binder materials. However, due to their chemical composition and structure, most of the mineral binders cause a relatively high alkalinity if suspended in aqueous media. As such, these binder systems cannot be used alone for beading of materials, in particular highly siliceous zeolites that are sensitive to high alkalinity under granulation conditions and/or conditions of subsequent drying and activation manufacturing steps.

Given these circumstances, the choice in utilization for extrusion and extrusion-like granulation of mineral binders for those highly siliceous materials has been those that exhibit a relatively low pH value if suspended in aqueous media. Specifically, but not exclusively a number of silica materials will exhibit this behavior. However, in both cases beading still remains a difficult task, or it leads to low-quality beads, which may be expressed by significant loss of both intrinsic primary particle crystallinity and mechanical strength or both of these disadvantages. Some of these shortfalls may be overcome by using various types of additives to improve granulation behavior. This approach, however, may increase the costs and/or the complexity of the granulation process.

Vapor phase partial oxidation reactions of hydrocarbons with air in the presence of a suitable catalyst, is employed industrially to form petrochemical products. Those products are removed, and part or the entire remaining gas stream is passed through a bed of a hydrophobic sorbent, which is advantageously a highly siliceous sorbent material. The hydrophobic sorbent sorbs mainly the non-reacted hydrocarbons from the gas stream without sorbing water vapor. The sorbed hydrocarbons are subsequently purged from the bed with air, and the air-hydrocarbon mixture is recycled to the partial oxidation reactor. This recuperation procedure, which is one step of a more complex process scheme, can be performed effectively in a PSA mode as described, together with related sorbent materials, in US-A-6,002,019.

Hydrophobic microporous materials that are substantially cation-free molecular sieves, such as zeolites of the types Y, silicalite-1, silicalite-2, ZSM-5, ZSM-11, ZSM-20 and mixtures thereof disclosed in US-A-6,002,019 as sorbents that are appropriate for use in recycling gases from partial oxidation reaction-based processes. No teaching, however, had been given in that patent as to any preferred shape or shaping procedure for those materials.

Shaping a highly siliceous pulverulent nanoporous crystalline material such as dealuminated Y-type zeolite into extrudates has been described in patent literature, in particular in US-A-5,316,993. However, US-A-5,316,993 refers to binders, the pH value of aqueous slurries of which does not exceed a value of 10 and does not disclose bead-shaped extrudates.

The present inventors have discovered that these problems can be alleviated if the highly siliceous pulverulent zeolite compound is thermally pretreated before undergoing the beading process. The zeolite in these beads will maintain its crystal structure, and the beads will exhibit excellent mechanical properties. This will enable the beads of such materials to be used effectively in advanced sorption processes such as in the area of gas separation and purification, particularly recuperation of low-molecular-weight hydrocarbons from process gas mixtures with carbon dioxide at high moisture levels.

### SUMMARY OF THE INVENTION

According to the present invention there is provided a process for preparing a sorbent shape as defined in Claim 1. The present invention provides for an improved method for making shapes of sorbents that, beside binders, comprise both microporous sorbents such as zeolites, and mesoporous sorbents such as of the structured MCM-type materials, both of them understood here and further as nanoporous crystalline materials. In accordance with a related IUPAC definition for pore sizes, nanoporous materials are understood as those having pores with diameters up to 50 nm (nanometer). These systems refer to both microporous materials that have (micro) pores up to c. 2 nm, and mesoporous materials that cover the (meso) pore range from c. 2 nm to c. 50 nm, and mixtures thereof. In particular, the process is useful for crystalline nanoporous materials such as zeolites with frameworks that are sensitive to destruction in alkaline media, especially when the pH value is equal to or greater than 10. Highly siliceous zeolites are susceptible to this phenomenon. To name one of such zeolites for purposes of an example, the inventors refer to dealuminated Y-type zeolite as prepared by dealuminating NaY-type zeolite according to a gas/solid phase reaction method, which was first described by K.H. Beyer and I.M. Belenkaja, in *Catalysis by Zeolites,* (Ed.: B. Imelik), Elsevier, Amsterdam, 1980, pp. 203-209.

The process of the current invention comprises heating the nanoporous material in its pulverulent crystalline form to a temperature that is sufficiently high to stabilize it against chemical degradation at said high pH levels. The temperature must be kept at a temperature below the one, at which the crystalline structure will be destroyed.

The pulverulent crystalline nanoporous material having been treated in this fashion is then bound by a mineral clay to form a shape, for example, that of beads, extrudates, and monolithic structures. These shapes can then be used in technical sorption processes, *e.g.,* for separation and purification of gases of various types.

In addition, the present invention provides for processes for separating a first gaseous component from a mixture of gaseous components which comprises passing the gas mixture through a sorbent zone that contains a sorbent comprised of shapes, which were produced by thermally treating the pulverulent crystalline nanoporous material prior to its final binding and shaping with a mineral clay binder.

### DETAILED DESCRIPTION OF THE PREFERRED EMBODIMENTS

This invention relates to an improved method for preparing a sorbent shape from a pulverulent crystalline nanoporous material and a mineral binder wherein the improvement comprises subjecting the crystalline nanoporous material in its, for example, pulverulent or spray-dried form to a thermal pretreatment prior to contacting it with the mineral binder.

Typically, sorbents made of nanoporous materials such as zeolitic molecular sieves for sorption processes are shaped into secondary particles such as extrudates, monolithic structures, hollow extrudates such as hollow cylinders, beads or beads with inner non-porous and, thus, non-sorbing cores. Beads are often preferred to extrudates due to their higher bulk density and crush strength, lower dust generation, higher resistance against attrition as well as due to improved overall sorption kinetic properties, but also due to easier modeling and practical execution of large-scale sorption processes based upon sorbent beads. Bead structures generally allow the operation of a large-scale sorption process more effectively and safely.

During the beading step of the overall sorbent manufacturing process, mineral clays such as of the types vermiculite, sepiolite, palygorskite, kaolinite, bentonite, attapulgite, mixtures thereof, and others are often used as the binder materials. However, due to their chemical composition and structure, most of these types of mineral binders cause a relatively high alkalinity, pH ≥ 10, if suspended in aqueous media. As such, these types of binder systems cannot be used solely for beading of materials that are sensitive to these high pH values under granulation conditions and/or conditions of subsequent drying and activation manufacturing steps. Highly siliceous zeolites such as a series of specimens of the faujasite structural type, FAU, will encounter these problems during manufacturing processes.

Given these circumstances, the choice in utilization for extrusion and extrusion-like granulation of mineral binders has been those that exhibit a relatively low pH value if suspended in aqueous media. Certain bentonite-like materials and a number of silica materials will exhibit this behavior. However, in both cases beading still remains a difficult task, or it leads to low-quality beads, which may be expressed by significant loss of both intrinsic primary particle crystallinity and mechanical strength or both of these disadvantages. Some of these shortfalls may be overcome by using various types of additives to improve granulation behavior. This approach, however, may increase the costs and/or the complexity of the granulation process.

As described above, the pulverulent crystalline nanoporous materials such as highly siliceous zeolites, which are employed in the subject invention, are sensitive to high pH values during shaping conditions and/or conditions of subsequent drying and activation manufacturing steps. For example, several specimens of the faujasite structural type, FAU, are susceptible to chemical attacks at high pH values during their transformation into beads. These faujasite specimens will include faujasite structures based on the NaY sub-type that were pretreated chemically in order to achieve a more or less complete lattice dealumination. Such types are, for example, the specimens dealuminated Y-type zeolite, DAY, which is made from a NaY zeolite by a specific gas/solid reaction using silicon tetrachloride, SiCl₄, as the dealuminating agent, or by a liquid/solid reaction using, to name a few, chelating agents EDTA (ethylenediamine tetraacetic acid), or (NH₄)₂SiF₆ for aluminum extraction from the lattice, and ultra-stable Y-type zeolite, USY, made from a NaY zeolite *via* numerous steps of ion exchange, and steaming, which will also be useful in the practice of the present invention. Main procedures of preparation and principal properties of such materials are summarized by V. Bosácek, *et al.,* and P. Fejes, *et al.*, in *Catalysis on Zeolites* (Eds.: D. Kalló and Kh.M. Minachev), Akadémiai Kiadó, Budapest, 1988, Chapter 6 (pp. 169-186) and Chapter 8 (pp.205-229), respectively, and also by R. Szostak in *Introduction to* *Zeolite Science and Practice* (Eds.: H. van Bekkum, E.M. Flanigen and J.C. Jansen), Elsevier, Amsterdam, 1991, pp.153-200. Similar procedures could be used to prepare the highly siliceous modifications of erionite and mordenite type zeolites useful in the practice of the present invention.

The pulverulent crystalline nanoporous materials of the present invention comprise sorbents with a silicon-to-aluminum atomic ratio in the range from about 25 to about 10,000:1. These materials include but are not limited to microporous materials such as zeolites (structural types given in brackets) Beta (BEA), ZSM-3 and ZSM-20 (EMT-FAU intermediates), erionite (ERI), DAY and USY (FAU), ZSM-5 and silicalite-1 (MFI), ZSM-11 and silicalite-2 (MEL), ZSM-12 and Theta-3 (MTW), mordenite (MOR), and Theta-1 (TON), as well as to mesoporous materials such as of the MCM-41 and MCM-48 types, and mixtures thereof. One of the characteristic properties of these materials with regard to their usage in the processes of the present invention, is their hydrophobicity.

Typical mineral binders that can be employed are mineral clay binders such as of the type vermiculite, sepiolite, palygorskite, kaolinite, bentonite, attapulgite, and mixtures thereof. When highly siliceous pulverulent crystalline nanoporous materials as named above are shaped at conditions like those used for microporous materials with a low silicon-to-aluminum ratio of the crystalline framework such as of the zeolites of structural types LTA, for example, NaA, or of another series of specimens of the faujasite structural type, FAU, in particular NaX zeolites with a silicon-to-aluminum ratio of their framework in the range of about 1.0:1 to about 1.3:1, are extruded or beaded, the highly siliceous materials will lose their crystallinity to large an extent. This structure loss, i.e., loss in crystallinity and, thus, in sorption capacity, depends not only on the composition of the mixture to shape but also on the type of shaping procedure and equipment, and process conditions involved, such as temperature, atmosphere, duration of sorbent treatment during shaping, drying and calcination of final shapes.

The present invention avoids or reduces this damage to the structure of the highly siliceous nanoporous crystalline sorbent framework, which otherwise would take place during the shaping process and subsequent steps of treatment of the shapes. The pretreatment according to this invention will vary with the type of nanoporous crystalline material employed with regards to temperature and amount of time applied.

The pretreatment comprises an exposure of the highly siliceous pulverulent crystalline nanoporous material to high temperature during a certain time period, prior to the shaping process. For this purpose the said highly siliceous pulverulent crystalline nanoporous material is heated to a temperature in the range of 600 °C to 1,000 °C. The duration of this exposure to high temperature can last from about 15 minutes to about 75 hours.

In a preferred embodiment of the present invention, the highly siliceous crystalline nanoporous material, for example, a DAY zeolite in its pulverulent or spray-dried form, is treated for about 30 minutes to about 2 hours at a temperature in the range of about (700 to 950) °C. This pretreatment results into a material that can be shaped in traditional ways by applying both the traditional methods and product mixtures as usual. The resulting shapes show no structural loss, *i.e.,* no loss in crystallinity and, therefore, in genuine sorption properties, as a result of the shaping and subsequent activation procedures. These shapes remain fully crystalline if compared to the untreated pulverulent zeolite component. An additional benefit is observed in that the resulting shapes exhibit excellent mechanical properties such as crush strength and loss to attrition. In the given case this feature refers especially to the shape of beads such as with or without non-sorbing inner cores.

Another preferred embodiment of the present invention refers to USY zeolites, which are another FAU specimen of the kind of highly siliceous crystalline nanoporous materials. In this regard, the thermal pretreatment can be performed as described for DAY zeolite materials. It is advantageous, however, to apply one or plural-step acid treatments to USY zeolites prior to their thermal pretreatment as described, for example, for DAY zeolite. Said thermal pretreatment to be carried out in a temperature range of about (600 to 1,000) °C during about 15 minutes to about 75 hours, but preferably in a temperature range of about (700 to 950) °C during about 30 minutes to about 2 hours, prior to the shaping process. A combination of thermal and acid pretreatment steps is also favorable for the preparation of highly siliceous and thermally stable zeolite mordenite specimens for the use in sorption processes of this invention.

The mineral binder content of the final shapes can range from about 5 to about 85 % on a (dry weight)/(dry weight) basis.

By adding thermally removable, state of the art pore forming substances, *e.g.*, fibrous derivatives of natural cellulose or artificial polymers to the shaping mixture, the porosity properties and, thus, sorption kinetic performance of the final shapes in their technical application (*e.g.*, sorption processes as described below in more detail) can be improved remarkably.

The present invention comprises low-alkalinity binders as well.

This invention also relates to the use of shapes made by binding a thermally pretreated pulverulent crystalline nanoporous material with a mineral binder in separating a gaseous component from a gaseous mixture.

In sorption processes of the present invention, a component of a gas mixture that is more strongly sorbed than other components of the gas mixture is separated from the other components of the mixture by contacting the gas mixture with the sorbent composition under conditions that effect sorption of the strongly sorbed component. The process can be TSA or PSA, the latter including Pressure-Vacuum Swing Adsorption, PVSA, or a combination of these processes. Preferably this process is of the PSA type.

The adsorption step of the process of the invention can be carried out at any of the usual and well-known pressures employed for gas phase TSA and PSA processes.

For TSA processes, the adsorption step can be carried out at absolute pressures as high as 50 bara or more. It is preferably carried out at absolute pressures not greater than about 20 bara, and, most preferably, not greater than about 10 bara.

When the sorption process is PSA, the pressure envelope of the process may vary widely. This pressure envelope ranges from the pressure at which adsorption takes place, to that at which desorption of gas from the sorbent material is executed. This desorption step is also known as regeneration. The pressure envelope depends on many circumstances that may be due to technical considerations caused by specific sorption properties of the gas mixture considered in juncture with the sorbent properties, but also on economic parameters. Typically, when the PSA process is a PVSA one, desorption is performed at a sub-atmospheric pressure.

The pressure envelope ranges usually from an absolute pressure in the range of about 5 bara for the adsorption step to about 0.05 bara for the regeneration step, but preferably from an absolute pressure in the range of about 3 bara to about 0.15 bara, and most preferably from an absolute pressure in the range of about 1.5 bara for the adsorption step to about 0.3 bara for the regeneration step. If no sub-atmospheric pressures are utilized in a PSA process, as for example, referring to hydrocarbon-containing gas mixtures, the desorption or regeneration pressure is usually preferred to be 1 bara or in the vicinity of this pressure, up to c. 1.5 bara, but the adsorption pressure may again vary widely due to the specific sorption properties of the gas components as exhibited for a given sorbent material. Usually, the adsorption pressure is about 5 bara, but preferably about 3 bara, and, most preferably, about 2.5 bara.

For PSA and PVSA processes, the temperature at which the adsorption step is carried out, depends upon a number of factors, such as the particular gases being separated, their relative content in the gas mixture that faces purification or separation, the particular sorbent being used, and the pressure at which the adsorption step is carried out.

In general, the adsorption step of a PSA process is carried out at a temperature of at least about - 50° C, preferably at a temperature of at least about 0° C, and, most preferably, at a temperature of at least about 15° C. The upper temperature limit at which the adsorption step is carried out, is generally about 200° C, and the adsorption step is preferably carried out at a temperature not higher than about 100° C, and, most preferably, carried out at a temperature not higher than about 75 °C.

In TSA processes, the adsorption step is generally carried out at a temperature in the range of about 5 °C to about 50 °C, and the sorbent regeneration step is generally carried out at a temperature in the range of about 100 °C to about 250 °C.

In principle, the composition of the gas mixture to be purified or separated may vary widely. Concerning purification, as to this invention, removal of one or multiple trace impurities from a gas stream is understood to proceed in a concentration range from single digit percentage to ppm values down to concentrations as low as in the ppb region. Concerning separation of gas mixture components, their concentration in feed and product gases may be as high as dozens of percents and as low as in the single digit percent value range or even at the ppm level, respectively.

As indicated above, the process of the invention can be used to separate mixtures of any two or more gases, provided that one of the gases is more strongly sorbed by the sorbents of the invention than the other gas or gases are, under either conditions of sorption equilibrium or non-equilibrium, *i.e.*, in the sorption kinetic regime of a process. The process is particularly suitable for the separation of gaseous low-molecular-weight hydrocarbons such as paraffins, *e.g.*, ethane, propane, n-butane and iso-butane, but also olefins, such as ethylene, propylene, the n-butylene isomers and iso-butylene, or their mixtures, and mixtures of said paraffins and olefins, from carbon dioxide in wet atmospheres where relative humidity may reach saturation values.

It will be appreciated that it is within the scope of the present invention to utilize conventional equipment to monitor and automatically regulate the flow of gases within the system so that it can be fully automated to run continuously in an efficient manner.

While this invention has been described with respect to particular embodiments thereof, it is apparent that numerous other forms and modifications of the invention will be obvious to those skilled in the art. The appended claims and this invention generally should be construed to cover all such obvious forms and modifications, which are within the true spirit and scope of the present invention.

### EXAMPLES

To characterize the materials of the Examples 1 to 5, micropore volumes were determined by nitrogen sorption measurements at liquid nitrogen temperature, using a Gemini 2370 sorption apparatus from Micromeritics, USA, and applying the "t-plot" method implemented therein (for details of the "t-plot" method, *cf.,* F. Rouquerol, J. Rouquerol and K. Sing, *Adsorption by Powders and Porous Solids,* Academic Press, London, 1999, p. 176). Measurements were performed on (0.2 to 0.5) g of materials. The beaded materials were used without special preparation but pulverulent materials were first pelletized using a laboratory pellet press. Then, the pellets were crushed, screened, and a size fraction of about (0.4 to 1.2) mm was used for measurements. Prior to sorption measurement the material was reactivated at a temperature, 400 °C, at a residual pressure of about 10⁻² torr, for 2 hours.

### EXAMPLE 1 (COMPARATIVE)

To manufacture beads of DAY zeolite (powder from Degussa-Hüls AG, Germany), the pulverulent crystalline material was shaped with 50 % (dry weight basis) of attapulgite clay, (CLARSOL ATC from Elf Atochem, France), without thermal pretreatment of the original DAY powder. The zeolite powder was first mixed with 50 wt.-% attapulgite clay (dry weight basis) in an applicable beading equipment. After 5 minutes of dry mixing, water was sprayed slowly (within 10 to 15 minutes) onto the dry mixture until formation of beads begun. Then, adding more water, the equipment was operated to generate beads of (8 x 12) mesh mainly, which is (1.6 - 2.5) mm in size. The "green" beads were sieved using appropriate screens, and their main fraction was dried at 60 °C in a laboratory oven overnight.

For calcining the dried beads in a bench scale muffle furnace, they were exposed to a temperature increase to about 850 °C within two hours. As to US 5,316,993, calcination in the range (850 to 1100) °C is decisive to allow for necessary mechanical properties. At 850 °C, calcination was extended for another hour. Then the material was cooled down slowly to ambient temperature.

The starting pulverulent material, DAY zeolite, showed a micropore volume of 0.289 cm³/g STP. So, the expected micropore volume for beads that contain 50 wt.-% of zeolite powder amounts to c. 0.145 cm³/g STP. As for the comparative example, the mixed, beaded, dried and reactivated but not calcined material exhibited a micropore volume of 0,096 cm³/g STP. This corresponds to only c. 66 % of the expected value. After calcination of a sample of the same material at 850 °C, *i.e.,* in accordance with US 5,316,993, the micropore volume of the material was found to be further reduced to 0.087 cm³/g STP.

### EXAMPLE 2

Beads of a crystalline microporous sorbent comprised of 50 wt.-% of DAY powder (dry weight basis) were prepared after an initial thermal pretreatment step executed over the original zeolite powder in a bench scale muffle furnace during 2 hours at 950 °C, where the heating started with the cold furnace. Then the material was cooled down slowly to ambient temperature.

Subsequent beading, drying and calcining the screened beads were performed exactly as described for Example 1. Then the material was cooled down slowly to ambient temperature.

The starting pulverulent material, DAY zeolite, showed a micropore volume of 0.289 cm³/g STP. After the thermal pretreatment the zeolite powder exhibited a micropore volume of 0.293 cm³/g STP. So, the expected micropore volume for beads that contain 50 wt.-% of zeolite powder amounts to c. 0.146 cm³/g STP. The mixed, beaded, dried, still non-calcined but reactivated material exhibited a micropore volume of 0.138 cm³/g STP. This corresponds to *c.* 95 % of the expected value. After calcination at 850 °C the micropore volume of the material remained practically unchanged, *viz.,* 0.135 cm³/g STP. An increase of calcination temperature to 900 °C caused an insignificant decrease of the micropore volume of beads to 0.131 cm³/g STP.

### EXAMPLE 3

A material with an expected content of 50 wt-% of DAY zeolite in the calcined final product, was prepared with 45 wt.-% of DAY powder (dry weight basis) that was initially pretreated thermally as described in Example 2, and mixed with 45 % (dry weight basis) attapulgite clay and 10 % of a commercially available microcrystalline, fibrous cellulose in an applicable beading equipment. After 5 minutes of dry mixing, water was sprayed slowly (within 10 to 15 minutes) onto the dry mixture until formation of beads begun. Then, adding more water, the equipment was operated to generate beads of (8 x 12) mesh mainly, which is (1.6 - 2.5) mm in size. The "green" beads were sieved by appropriate screens, and their main fraction was dried at 60 °C in a laboratory oven overnight.

For calcining in a bench scale muffle furnace, the dried beads were exposed to a temperature increase to about 850 °C within two hours. At this temperature, calcination was extended for another hour. Then the material was cooled down slowly to ambient temperature.

The zeolite powder showed a micropore volume of 0.293 cm³/g STP after thermal pretreatment. Thus, the expected micropore volume for beads containing 50 wt.-% of DAY powder amounts to 0.146 cm³/g STP. The mixed, beaded and dried material, which was calcined at 850 °C and reactivated prior to measurements, exhibited a micropore volume of 0.125 cm³/g STP. This corresponds to 86 % of the expected value. Rate of sorption uptake for carbon dioxide measured on this material was by factor three higher than that on the material of Example 2.

### EXAMPLE 4

To manufacture beads that contain 50 % (dry weight basis) of a USY zeolite powder (CBV 780 from Zeolyst, USA), the pulverulent crystalline material was first subject to a thermal pretreatment step in accordance with that described in Example 2, *viz.,* heated in a bench scale muffle furnace for 2 hours at 950 °C, where the heating started with the cold furnace. Then the material was cooled down slowly to ambient temperature.

The thermally pretreated powder was then mixed with 50 % (on dry basis) attapulgite clay (CLARSOL ATC from Elf Atochem, France) and shaped in an applicable beading equipment. After 5 minutes of dry mixing, water was sprayed slowly (within 10 to 15 minutes) onto the dry mixture until formation of beads begun. Then, adding more water, the equipment was operated to generate beads of (8 x 12) mesh mainly, which is (1.6 - 2.5) mm in size. The "green" beads were sieved using appropriate screens, and their main fraction was dried at 60 °C in a laboratory oven overnight.

For calcining in a bench scale muffle furnace, the dried beads were exposed to a temperature increase to about 850 °C within two hours. At this temperature, calcination was extended for another hour. Then the material was cooled down slowly to ambient temperature.

The starting pulverulent material, CBV 780, showed a micropore volume of 0.283 cm³/g STP. The thermally pretreated USY zeolite powder exhibited a micropore volume of 0.268 cm³/g STP. So, the expected micropore volume for beads that contain 50 wt.-% of USY powder amounts to 0.134 cm³/g STP. The mixed, beaded, dried, still non-calcined but reactivated material had a micropore volume of 0.048 cm³/g STP. This corresponds to only 36 % of the expected value. After calcination at 850 °C, the micropore volume of this material was found to be reduced further: it amounted to only 0.010 cm³/g STP. Thus, as a result of the procedure described, the crystal structure of the sorbent, USY zeolite material, CBV 780, underwent significant damage.

### EXAMPLE 5

To minimize the damage as caused by the procedure described in Example 4, the starting pulverulent material, USY zeolite, CBV 780, was subject to an acid pretreatment step prior to the thermal pretreatment step as described in Example 2. The acid pretreatment step was performed as follows. An amount of 2000 g of USY powder was suspended under continuous stirring in 10 liters of distilled water, and 140 ml of 35 % hydrochloric acid, HCI, were added to the suspension. The pH value of the resulting suspension was between 1 and 1.5. After a stirring time, 2 hours, at ambient temperature, the suspension was filtered. The filter cake was washed with 5 liters of distilled water and dried overnight in a laboratory oven at 60 °C. The thus pretreated powder was then processed in accordance with the description given in Example 4.

The starting pulverulent material, CBV 780, showed a micropore volume of 0.283 cm³/g STP. After the acid pretreatment step the micropore volume remained practically unchanged: it amounted to 0.276 cm³/g STP. The then thermally pretreated USY zeolite powder exhibited a micropore volume of 0.259 cm³/g STP. So, the expected micropore volume for beads that contain 50 wt.-% of USY powder amounts to c. 0.129 cm³/g STP. The mixed, beaded, dried, still non-calcined but reactivated material had a micropore volume of 0.115 cm³/g STP. This corresponds to c. 89 % of the expected value. After calcination at 850 °C, the micropore volume of this material was found to be reduced to 0.102 cm³/g STP, which still corresponds to c. 79 % of its expected value.

Thus, as a result of the acid pretreatment step described, the damage to the USY zeolite material, CBV 780, is suppressed significantly as compared to the material non-treated by HCI but thermally pretreated, *cf*., Example 4.

## Claims

1. A process for preparing a sorbent shape comprising the steps of
(a) heating a pulverulent crystalline nanoporous material;
(b) preparing a mixture of said pulverulent crystalline nanoporous material with an inorganic binder;
(c) forming said sorbent shape; and
(d) drying and activating said sorbent shape.

2. A process as claimed in Claim 1, wherein said sorbent shape is selected from the group of beads, extrudates, hollow cylinders, beads with non-porous inner cores, cylinders with non-porous inner cylinders and monoliths.

3. A process as claimed in Claim 1 or Claim 2, wherein said pulverulent crystalline nanoporous material comprises those with a silicon-to-aluminum atomic ratio between about 25:1 and about 10,000:1.

4. A process as claimed in Claim 3, wherein said pulverulent crystalline nanoporous material is selected from the group of microporous materials of the zeolites types Beta, erionite, mordenite, silicalite-1, silicalite-2, Theta-1, Theta-3, Y, ZSM-3, ZSM-5, ZSM-11, ZSM-12, ZSM-20 and their mixtures, and mesoporous materials MCM-41 and MCM-48 and their mixtures, and mixtures thereof.

5. A process as claimed in Claim 4, wherein said pulverulent crystalline nanoporous material of the zeolite type Y is selected from the group consisting of dealuminated Y-type and ultra-stable Y-type zeolites.

6. A process as claimed in Claim 5 wherein said ultra-stable Y-type zeolite undergoes an acid treatment prior to the heating.

7. A process as claimed any one of the preceding claims wherein said pulverulent crystalline nanoporous material is heated to a temperature of 600 °C to 1,000 °C for 15 minutes to 75 hours.

8. A process as claimed in any one of the preceding claims, wherein said inorganic binder is a clay mineral.

9. A process as claimed in any one of the preceding claims, wherein said inorganic binder is present in a range of 5 to 85 % by weight in said sorbent shape.

10. A process as claimed in any one of the preceding claims, wherein said mixture of said pulverulent crystalline nanoporous material with an inorganic binder contains additionally a pore forming substance.

11. A process of separating a gas component from a gas mixture comprising subjecting said gas mixture to a sorption process comprising the steps:
(a) passing said gas mixture through at least one adsorption zone containing a sorbent composition comprising sorbent shapes prepared by the process as claimed in Claims 1 to 10, thereby preferentially sorbing said gas component from said gas mixture; and
(b) regenerating said sorbent composition at a temperature higher than said selected temperature, at a pressure lower than said selected pressure, or at both a temperature higher than said selected temperature and a pressure lower than said selected pressure.

12. The process as claimed in Claim 11 wherein said gas component is selected from the group consisting of paraffin, olefin and mixtures of paraffins and olefins; and said gas mixture is selected from the group consisting paraffin, carbon dioxide and water; olefin, carbon dioxide and water; and paraffins, olefins, carbon dioxide and water.
